# EUROPÄISCHE PATENTSCHRIFT

(11) **EP 3 418 101 B1**
(45) Veröffentlichungstag und Bekanntmachung des Hinweises auf die Patenterteilung: **26.07.2023**
(21) Anmeldenummer: 18175905.1
(22) Anmeldetag: 05.06.2018
(51) Int. Cl.: B60K 35/00, B60K 37/00, B60K 37/06, G06F 3/02, G06F 3/0484, B60K 37/02

(54) **KOMBINATIONSINSTRUMENT ZUR HIERARCHIEFREIEN FUNKTIONSAUSWAHL**
COMBINED INSTRUMENT FOR HIERARCHY-FREE FUNCTION SELECTION
INSTRUMENT DE COMBINAISON POUR UNE SÉLECTION DE FONCTION SANS HIÉRARCHIE

(30) Priorität: 16.06.2017 DE 102017113229
(43) Veröffentlichungstag der Anmeldung: 26.12.2018
(73) Patentinhaber: MAN Truck & Bus SE, 80995 München (DE)
(72) Erfinder: Gerlinger, David, 80809 München (DE); Mohra, Holger, 80805 München (DE); Arnold, Claus, 93161 Sinzing (DE); Zademach, Martin, 85232 Bergkirchen (DE); Güllich, Johannes, 85229 Markt Indersdorf (DE); Wölfel, Christiane, 80337 München (DE)
(74) Vertreter: v. Bezold & Partner Patentanwälte - PartG mbB

(56) Entgegenhaltungen:
- EP-A1- 1 342 605
- DE-A1-102005 023 394
- DE-A1-102010 055 132
- DE-U1- 29 604 717
- US-A1- 2007 143 706

## Beschreibung

Die vorliegende Erfindung betrifft allgemein ein Kombinationsinstrument eines Fahrzeugs. Insbesondere sind, ohne darauf beschränkt zu sein, ein Kombinationsinstrument zur hierarchiefreien Funktionsauswahl und ein damit ausgestattetes Fahrzeug bereitgestellt.

Bestehende Kombinationsinstrumente umfassen einerseits eine hierarchische Menüstruktur, innerhalb der mit wenigen Navigationsbedienelementen eine stetig wachsende Anzahl von Fahrzeugfunktionen abrufbar ist. Andererseits dienen im Bereich des Kombinationsinstruments Schalter, Drehsteller und Bedienelemente beispielsweise mit einer Walze der direkten Einstellung verschiedener Fahrzeugfunktionen, wie z.B. der Leuchtweitenregulierung oder der Helligkeit einer Hintergrundbeleuchtung am Kombinationsinstrument. Zusätzlich sind im Bereich hinter dem Lenkrad häufig einzelne Tasten zu finden, die beispielsweise zur Rücksetzung des Kilometerstands oder zur Menübedienung vorgesehen sind.

Das Dokument EP 1 342 605 A1 beschreibt eine Steuerungsvorrichtung für eine solche hierarchische Menüstruktur. Menüpunkte können sprachgesteuert oder manuellen betätigt werden. Die Vorrichtung umfasst dabei die Bildschirmanzeige für die Menüführung, in der auch Analoginstrumente angezeigt sind.

Das Dokument DE 10 2010 055 132 A1 betrifft eine Nutzerschnittstelle in einem Fahrzeug, bei welcher hierarchisch strukturierte Informationen in einem Hauptanzeigebereich einer Anzeigefläche anzeigt werden. Zur manuellen Bedienung ist am Lenkrad des Fahrzeugs eine Eingabevorrichtung angeordnet. In Abhängigkeit von der manuellen Bedienaktion werden die Anzeigeinhalte verändert.

Das Dokument DE 10 2005 023 394 A1 stellt sich zur Aufgabe, eine einfach und schnell betätigbare Möglichkeit zur Schaltung von mindestens zwei Lichtkomponenten eines Fahrzeugs anzugeben. Zur Steuerung der Lichtkomponenten wird über eine Betätigung des Inkrementalgebers, beispielsweise eine Drehung um 15°, das Schaltverfahren für eine Lichtkomponenten gestartet, wobei daraufhin eine Anzeigeeinrichtung in das Kombiinstrument des Fahrzeugs eingeblendet wird.

Dokument DE 296 04 717 U1 beschreibt einen Bedienkomplex, der nach dem Einschalten der Stromversorgung sein Menü aktiviert.

Das Dokument US 2007/143706 A1 beschreibt eine Bildlaufleiste, wie sie in Computeranwendungen zur Fenstersteuerung verwendet wird.

Während die menügesteuerte Funktionsauswahl den wachsenden und ausstattungsspezifischen Funktionsumfang ermöglicht, ermöglichen griffbereite physische Steller die Einstellungen von sicherheitsrelevanten Fahrzeugfunktionen. Solchen wichtigen Funktionen ist gemeinsam, dass sie häufig auch während der Fahrt benötigt werden und daher schnell erreicht werden sollten.

Jedoch ist das Nebeneinander von menügesteuerter Funktionsauswahl und direkter Einstellung an einzelnen physischen Stellern nachteilig für die Auffindbarkeit während der Fahrt. Zudem muss für eine direkte Funktionseinstellung mittels physischer Steller für jede Funktion ein eigenes physisches Bedienelement im Bereich des Kombinationsinstruments vorgesehen sein. Die vielen verschiedenen Bedienelemente erhöhen die Gefahr der Fehlbedienung dieser wichtigen Funktionen und der Ablenkung beim Fahren zum Auffinden des entsprechenden Bedienelements. Auch ist nach dem Auffinden des Bedienelements die Bedienlogik innerhalb der Gruppe physischer Bedienelemente nicht durchgängig und erfordert unterschiedliche Betätigungen, wie Drehen, Rollen und Drücken.

Ferner führen die physischen Steller zu einer unruhigen und unübersichtlichen Optik des Fahrerplatzes. Auch entsprechen der Vielzahl verschiedener Bedienelemente ein hoher Platzbedarf und ein aufwändiger Einbau der Bedienelemente im Kombinationsinstrument.

Bei vielen bestehenden Fahrzeugen ist beispielsweise die Leuchtweitenregulierung und die Dimmung der Instrumentenbeleuchtung verdeckt neben oder unter dem Lichtschalter angeordnet. Diese Position ist während der Fahrt nur schwer ohne Ablenkung zu erreichen. Eine Integration dieser Funktionen in die bestehende Menüstruktur würde deren Auffindbarkeit weiter verschlechtern. Ferner unterliegen einzelne wichtige Funktionen, beispielsweise die Leuchtweitenregulierung, gesetzlichen Vorgaben, die einer Integration der Funktion in die bestehende Menüstruktur entgegenstehen.

Ein weiterer Nachteil ist die fehlende Überprüfbarkeit der aktuellen Einstellung mittels physischer Steller. Oftmals beschränkt sich die Rückmeldung beim Einstellen auf die Auswirkung der Änderungen am Fahrzeug. Dies macht die Einstellung für den Fahrer schwer nachvollziehbar, beispielsweise wenn die Leuchtweite tagsüber nicht zu erkennen ist.

Somit besteht eine Aufgabe der vorliegenden Erfindung darin, eine Technik zur sicheren Bedienung von Fahrzeugfunktionen während der Fahrt bereitzustellen. Eine alternative oder weitere Aufgabe besteht darin, die Zugänglichkeit von Fahrzeugfunktionen zu verbessern und/oder die Anzahl der für die während der Fahrt zugänglichen Fahrzeugfunktionen notwendigen Bedienelemente zu verringern.

Diese Aufgabe oder Aufgaben sind durch ein Kombinationsinstrument bzw. ein Fahrzeug gemäß dem unabhängigen Anspruch gelöst. Vorteilhafte Ausgestaltungen und weitere Merkmale sind Gegenstand der anhängigen Patentansprüche und werden im Folgenden unter teilweiser Bezugnahme auf die beigefügten Zeichnungen näher beschrieben.

Gemäß einem Aspekt ist ein Kombinationsinstrument für ein Fahrzeug bereitgestellt. Das Kombinationsinstrument umfasst einen mechanischen Taster und eine Anzeigeeinheit, die dazu ausgelegt ist, in einem ersten Zustand Angaben zum Fahrbetrieb anzuzeigen und in Reaktion auf eine Betätigung des mechanischen Tasters in einen zweiten Zustand zu wechseln, in dem auswählbare Funktionen des Kombinationsinstruments angezeigt sind. Das Kombinationsinstrument umfasst ferner eine Eingabeeinheit zur Auswahl einer der im zweiten Zustand angezeigten Funktionen.

Die im zweiten Zustand auswählbaren Funktionen können mittels der Anzeigeeinheit in einer Auswahlebene und/oder hierarchiefrei angezeigt sein. Alternativ oder ergänzend können die im zweiten Zustand auswählbaren Funktionen mittels der Eingabeeinheit in einer Auswahlebene und/oder hierarchiefrei auswählbar sein.

Die auswählbaren Funktionen können in einer linearen (d.h. aufeinanderfolgenden, insbesondere zirkularen, d.h., umlaufenden) Ordnung an der Anzeigeeinheit angezeigt und/oder durch die Eingabeeinheit auswählbar sein. Die auswählbaren Funktionen können in einer Ebene angezeigt und/oder auswählbar sein. Die auswählbaren Funktionen können ohne Hierarchie und/oder in einer einzigen Auswahlebene (auch: Menüebene) angezeigt und/oder auswählbar sein.

Im zweiten Zustand können die auswählbaren Funktionen (beispielsweise innerhalb eines geschlossenen Rahmens) zusätzlich zu den Angaben zum Fahrbetrieb angezeigt werden oder diese überlagern.

Der mechanische Taster kann in räumlicher Zuordnung zur Anzeigeeinheit angeordnet sein. Das "Kombinationsinstrument" kann, beispielsweise über einen Bereich der Anzeigeeinheit hinaus, ein Armaturenbrett oder Bereiche des Armaturenbretts des Fahrzeugs umfassen. Insbesondere kann ein Einbauort des mechanischen Tasters neben oder außerhalb der Anzeigeeinheit angeordnet sein.

Die Eingabeeinheit kann eine oder mehrere Multifunktionstasten eines Lenkrads des Fahrzeugs umfassen. Alternativ oder ergänzend kann die Eingabeeinheit eine Schnittstelle (beispielsweise Buchsen oder Steckverbindungen) zum Anschluss an Multifunktionstasten und/oder ein Multifunktionslenkrad des Fahrzeugs umfassen.

Der mechanische Taster und/oder die Anzeigeeinheit können an einem Fahrerplatz neben (d.h. quer zur Fahrtrichtung) oder hinter (d.h. in Fahrtrichtung) dem Lenkrad des Fahrzeugs angeordnet sein.

Optional kann das Kombinationsinstrument ferner eine Menütaste umfassen. In Reaktion auf eine Betätigung der Menütaste und/oder eine Betätigung der Eingabeeinheit im ersten Zustand kann die Anzeigeeinheit in einen dritten Zustand wechseln, in dem ein von der Auswahlebene verschiedenes Menü angezeigt wird. Das Menü kann hierarchisch strukturiert sein und/oder verschachtelte Menüebenen umfassen.

Die Eingabeeinheit kann ferner zur Navigation in einer Menüstruktur des Kombinationsinstruments unabhängig vom zweiten Zustand oder außerhalb des zweiten Zustands (beispielsweise im dritten Zustand) ausgebildet sein. Die Menüstruktur des dritten Zustands kann, beispielsweise im Unterschied zur Auswahlebene des zweiten Zustands, hierarchisch sein. Die Hierarchie der Menüstruktur kann vorliegen, falls in Reaktion auf die Auswahl eines Auswahlpunkts in einer ersten Auswahlebene eine zweite Auswahlebene mit weiteren Auswahlpunkten angezeigt wird.

Die auswählbaren Funktionen umfassen eine Leuchtweitenregulierung. Die auswählbaren Funktionen können das Setzen eines Sollwerts der Leuchtweitenregulierung umfassen, beispielsweise einer Längsneigung des Lichtkegels der Frontscheinwerfer zur Kompensation eines Nickwinkels des Fahrzeugs.

Die Anzeigeeinheit ist ferner erfindungsgemäß dazu ausgebildet, in Reaktion auf die Betätigung des mechanischen Tasters die Funktion der Leuchtweitenregulierung vorauszuwählen. Beispielsweise kann ein voreingestellter Sollwert der Leuchtweitenregulierung in Reaktion auf die Betätigung des Tasters ausgewählt sein.

Der mechanische Taster weist ein Symbol oder eine Kennzeichnung der Leuchtweitenregulierung auf. Das Symbol oder die Kennzeichnung der Leuchtweitenregulierung kann am mechanischen Taster (beispielsweise auf einer Betätigungsfläche des Tasters) oder in räumlicher Zuordnung zum Taster (beispielsweise angrenzend an die Betätigungsfläche des mechanischen Tasters) angeordnet sein. Das Symbol kann der ECE-Regelung R48, Anhang 8, Absatz 1.5 entsprechen.

Die Eingabeeinheit kann zur Eingabe einer oder mehrerer erster Richtungen ausgebildet sein. Die Anzeigeeinheit kann ferner dazu ausgebildet sein, in Reaktion auf die Eingabe der ersten Richtung oder einer der ersten Richtungen die im zweiten Zustand ausgewählte Funktion zu verändern, beispielsweise gemäß der linearen oder zirkularen Ordnung. Die erste Richtung oder die ersten Richtungen können horizontal sein.

Die Anzeigeeinheit kann ferner dazu ausgebildet sein, einen der ausgewählten Funktion zugeordneten Funktionswert anzuzeigen. Der der ausgewählten Funktion zugeordnete Funktionswert kann ein Sollwert der ausgewählten Funktion sein, beispielsweise der Sollwert der Leuchtweitenregulierung.

Die Eingabeeinheit kann zur Eingabe einer Bestätigung und/oder einer oder mehrerer zweiter Richtungen ausgebildet sein. Die Eingabe der Bestätigung und/oder der zweiten Richtung kann eine Betätigung, beispielsweise eines Tasters oder einer Wipper, umfassen. Die zweiten Richtungen können vertikal sein.

Das Kombinationsinstrument kann dazu ausgebildet sein, entsprechend der Eingabe der zweiten Richtung oder einer der zweiten Richtungen den angezeigten Funktionswert zu verändern (auch: Auswahl des Funktionswerts) und/oder in Reaktion auf die Eingabe der Bestätigung den angezeigten oder ausgewählten Funktionswert der ausgewählten Funktion zuzuweisen, beispielsweise als Sollwert der ausgewählten Funktion zu setzen.

Das Kombinationsinstrument kann ferner dazu ausgebildet sein, die Veränderung des Funktionswerts in Reaktion auf die Eingabe der zweiten Richtung oder einer der zweiten Richtungen zu verzögern, wenn der angezeigte oder ausgewählte Funktionswert einem vorbestimmten Funktionswert entspricht. Der vorbestimmte Funktionswert kann einer Neutralstellung der ausgewählten Funktion entsprechen, beispielsweise bei der Leuchtweitenregulierung als der ausgewählten Funktion. Alternativ oder ergänzend kann der vorbestimmte Funktionswert kann ein vorbestimmter Sollwert der ausgewählten Funktion sein, beispielsweise der vorbestimmte Sollwert der Leuchtweitenregulierung.

Die Verzögerung kann eine Totzeit (auch: Timeout) der Eingabe der zweiten Richtung umfassen. Während der Totzeit kann die Eingabe der zweiten Richtung zu keiner Veränderung des angezeigten oder ausgewählten Funktionswerts führen. Die Totzeit kann eine vorbestimmte Zeitdauer (beispielsweise 1 Sekunde bis 5 Sekunden) umfassen. Die Totzeit kann mit dem Anzeigen des vorbestimmten Funktionswerts beginnen. Die Totzeit kann mit Ablauf der vorbestimmten Zeitdauer enden.

Alternativ oder ergänzend kann die Verzögerung eine mehrfache (beispielsweise zweifache) Eingabe der zweiten Richtung umfassen. Erst nach der mehrfachen Eingabe der zweiten Richtung, beispielsweise einer aufeinanderfolgenden Eingabe derselben zweiten Richtung, kann der angezeigte oder ausgewählte Funktionswert verändert werden, wenn der angezeigte oder ausgewählte Funktionswert dem vorbestimmten Funktionswert entspricht.

Die Verzögerung kann einer Raststellung entsprechen, beispielsweise gemäß ECE-Regelung R48, Absatz 6.2.6.2.2. Beispielsweise kann vor und/oder nach dem vorbestimmten Funktionswert durch die verzögerte Reaktion auf die Eingabe der zweiten Richtung eine Verzögerungsbarriere implementiert sein. Die Raststellung kann auch als "Softanschlag" bezeichnet werden. Wenn der Fahrer versucht, durch die Eingabe der zweiten Richtung den ausgewählten Funktionswert über den vorbestimmten Funktionswert hinweg (beispielsweise gemäß der linearen oder zirkularen Ordnung) zu verändern, wird eine erste Bedienhandlung unterbunden (d.h. die Eingabe der zweiten Richtung bewirkt keine Veränderung der Auswahl des Funktionswerts). Dies kann über eine stetige, beispielsweise (gedämpft) schwingende Bewegung der Auswahl in der Anzeigeeinheit rückgemeldet werden. Erst nach der Verzögerung (beispielsweise nach Ablauf der Totzeit oder in Reaktion auf die mehrfache Eingabe) kann der ausgewählte Funktionswert verändert werden.

Die (beispielsweise linear oder zirkular) geordneten Funktionswerte können Elemente eine Liste sein. Die Eingabe der zweiten Richtung kann einen Wechsel zwischen ausgewählten Listenelementen bewirken. Eine andauernde (beispielsweise wiederholte oder kontinuierliche) Eingabe der zweiten Richtung mittels der Eingabeeinheit kann ein Durchlaufen der Liste bewirken.

Bei Erreichen des vorbestimmten Funktionswerts (beispielsweise einem Listenanfang oder einem Listenende) kann der Listendurchlauf in einer bisherigen Listendurchlaufrichtung angehalten werden gemäß der Verzögerung. Eine Wiederaufnahme des angehaltenen Listendurchlaufs durch einen Übergang zum nächsten Funktionswert in der bisherigen Listendurchlaufrichtung (beispielsweise durch einen direkten Übergang vom Listenende zum Listenanfang oder durch einen direkten Übergang vom Listenanfang zum Listenende gemäß der zirkularen Ordnung) kann erst nach der Verzögerung (beispielsweise nach Ablauf der Totzeit oder in Reaktion auf die mehrfache Eingabe) ausführgeführt werden. Die Totzeit kann mit dem Anhalten des Listendurchlaufs beginnen. Alternativ oder ergänzend kann das Kombinationsinstrument, insbesondere die Eingabeeinheit, dazu ausgebildet sein, beim, unmittelbar vor und/oder unmittelbar nach dem Erreichen des vorbestimmten Funktionswerts (beispielsweise dem Listenanfang oder dem Listenende) ein optisches, akustisches und/oder haptisches Signal zu erzeugen.

Die Anzeigeeinheit kann ferner dazu ausgebildet sein, nach einer vorbestimmten Zeitdauer ohne Eingabe an der Eingabeeinheit vom zweiten Zustand in den ersten Zustand zu wechseln. Alternativ oder ergänzend kann die Anzeigeeinheit ferner dazu ausgebildet sein, in Reaktion auf eine Betätigung des mechanischen Tasters im zweiten Zustand in den ersten Zustand zu wechseln.

Gemäß einem weiteren Aspekt ist ein Fahrzeug, insbesondere ein Nutzfahrzeug, bereitgestellt, das ein Kombinationsinstrument gemäß dem vorstehenden Aspekt in einer der Ausführungsvarianten umfasst. Das Fahrzeug kann ein Landfahrzeug oder Wasserfahrzeug sein. Insbesondere kann das Fahrzeug ein Kraftfahrzeug sein. Das Nutzfahrzeug kann ein Bus zur Personenbeförderung, oder ein Lastkraftwagen oder eine Sattelzugmaschine zur Nutzlastbeförderung sein.

Weitere Merkmale und Vorteile der Erfindung werden im Folgenden unter Bezugnahme auf die beigefügten Zeichnungen beschrieben. Es zeigen:
- Figur 1: eine schematische Ansicht eines ersten Ausführungsbeispiels des Kombinationsinstruments in unterschiedlichen Zuständen;
- Figur 2: eine schematische Ansicht eines zweiten Ausführungsbeispiels des Kombinationsinstruments im zweiten Zustand;
- Figur 3: eine schematische Ansicht eines dritten Ausführungsbeispiels des Kombinationsinstruments im zweiten Zustand;
- Figur 4: eine schematische Ansicht eines vierten Ausführungsbeispiels des Kombinationsinstruments im zweiten Zustand; und
- Figur 5: eine schematische Darstellung eines Fahrplatzes mit einem Ausführungsbeispiel des Kombinationsinstruments im zweiten Zustand.

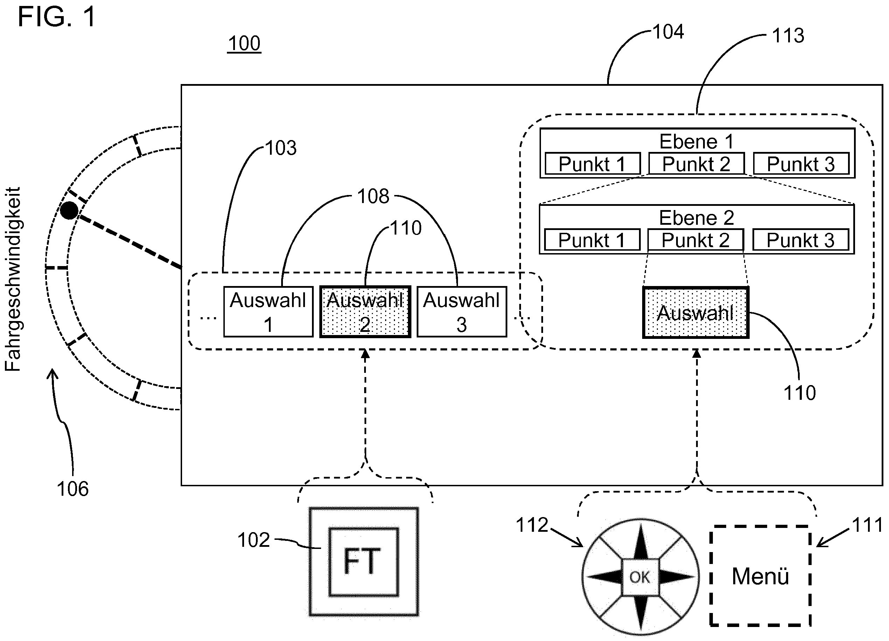

Figur 1 zeigt schematisch ein erstes Ausführungsbeispiel eines allgemein mit Bezugszeichen 100 bezeichneten Kombinationsinstruments eines Fahrzeugs, insbesondere eines Nutzfahrzeugs. Das Kombinationsinstrument 100 umfasst einen mechanischen Taster 102 und eine Anzeigeeinheit 104.

In einem ersten Zustand des Kombinationsinstruments 100 sind mittels der Anzeigeeinheit 104 Angaben 106 zum Fahrbetrieb des Fahrzeuges angezeigt. Hierzu kann die Anzeigeeinheit 104 auch analoge Anzeigeinstrumente umfassen. In Reaktion auf eine Betätigung des mechanischen Tasters 102 wechselt die Anzeigeeinheit 104 in einen zweiten Zustand. Im zweiten Zustand des Kombinationsinstruments 100 sind mittels der Anzeigeeinheit 104 in einer Auswahlebene 103 zwei oder mehr auswählbare Funktionen 108 des Kombinationsinstruments 100 angezeigt. Vorzugsweise ist eine Funktion 110 unter den auswählbaren Funktion 108 vorausgewählt. Im in Figur 1 gezeigten Ausführungsbeispiel ist die ausgewählte Funktion 110 durch einen helleren Hintergrund und/oder eine hellere Umrandung gegenüber den anderen auswählbaren Funktionen 108 hervorgehoben.

Das Kombinationsinstrument 100 umfasst ferner eine Eingabeeinheit 112 zur Auswahl einer der im zweiten Zustand angezeigten Funktionen 108. Vorzugsweise ist die Eingabeeinheit zur Auswahl einer der Funktionen 108 übereinstimmend mit einer Eingabeeinheit, die für die Bedienung einer Menüstruktur 113 (beispielsweise in einem dritten Zustand des Kombinationsinstruments 100 vorgesehen ist.

Die Menüstruktur 113 unterscheidet sich von der Auswahlebene 103 darin, dass die Menüstruktur 113 mehrere Menüebenen umfasst (d.h. hierarchisch strukturiert ist) und/oder bei Aufruf der Menüstruktur 113 keine Funktion vorausgewählt ist. Vielmehr muss bei Verwendung der Menüstruktur 113 zur Auswahl einer Funktion 110 (beispielsweise mittels der Eingabeeinheit 112) mindestens ein Hauptpunkt in einer ersten Menüebene der Menüstruktur 113 angesteuert und bestätigt werden, und in einer daraufhin angezeigten zweiten Menüebene ein Unterpunkt der Menüstruktur 113 angesteuert und bestätigt werden.

Im ersten Zustand des Kombinationsinstruments 100 werden ausschließlich die Angaben 106 zum Fahrbetrieb angezeigt. Beispiele für Angaben 106 zum Fahrbetrieb umfassen Fahrgeschwindigkeit, Angaben eines Navigationssystems (beispielsweise zum Ort oder zur Fahrtrichtungsänderung), Abstand zum vorausfahrenden Fahrzeug (beispielsweise in einer Längen- und/oder Zeiteinheit), Status einer kamerabasierten Spurerkennung und/oder Warnhinweise eines Fahrerassistenzsystems.

Im zweiten Zustand kann die Auswahlebene 103 die zuvor im ersten Zustand angezeigten Angaben 106 zum Fahrbetrieb (beispielsweise teilweise oder vollständig) ersetzen oder überlagern.

Der Übergang vom ersten Zustand zum zweiten Zustand wird durch die Betätigung des mechanischen Tasters 102 bewirkt. Vorzugsweise bewirkt die Betätigung des mechanischen Tasters 102 im zweiten Zustand auch den Übergang zum ersten Zustand des Kombinationsinstruments 100.

Während im in Figur 1 gezeigten Ausführungsbeispiel des Kombinationsinstruments 100 die Auswahlebene 103 und die hierarchische Menüstruktur 113 zusammen angezeigt sind (beispielsweise in Reaktion auf die Betätigung des mechanischen Tasters 102 im dritten Zustand), schließen sich in einer Variante (die mit jedem Ausführungsbeispiel kompatibel ist) der zweite Zustand mit der Anzeige der Auswahlebene 103 und der dritte Zustand mit der Anzeige der Menüstruktur 113 gegenseitig aus. Beispielsweise bewirkt die Betätigung eines Menütasters 111 im zweiten Zustand den Übergang in den dritten Zustand, wobei die Auswahlebene 103 ausgeblendet und die Menüstruktur 113 eingeblendet wird. Alternativ oder ergänzend bewirkt die Betätigung des mechanischen Tasters 102 im dritten Zustand den Übergang zum zweiten Zustand, wobei die Menüstruktur 113 ausgeblendet wird und die Auswahlebene 103 eingeblendet wird.

Der Menütaster 111 zum Aufrufen der Menüstruktur 113, d.h., des dritten Zustands, kann mit "Bord Computer" oder "BC" beschriftet sein. Der Menütaster 111 ist optional. Beispielsweise kann eine Betätigung der Eingabeeinheit 112 im ersten Zustand den Übergang zum dritten Zustand mit der Anzeige der Menüstruktur 113 bewirken.

Im zweiten Zustand bewirkt die Betätigung der Eingabeeinheit 112 die Auswahl einer der auswählbaren Funktionen 108 oder die Aktivierung (beispielsweise die Einstellung eines Funktionswerts) der gegenwärtig ausgewählten Funktion 110. Im dritten Zustand bewirkt die Betätigung der Eingabeeinheit 112 die Auswahl oder das Aufrufen eines Menüpunkts der Menüstruktur 113.

Der mechanische Taster 102 ist im primären Sichtfeld und/oder manuellen Erreichbarkeitsbereich des Fahrers angeordnet. Der mechanische Taster 102 realisiert eine zentrale Verknüpfungstaste für die Direktanwahl bestimmter Funktionen 108 des Kombinationsinstruments 100, beispielsweise solcher Funktionen, die auch während der Fahrt dem Fahrer zur Aktivierung zur Verfügung stehen. Die in der Auswahlebene 103 des zweiten Zustands auswählbaren Funktionen 108 können mechanische Bedienelemente (z. B. Taster, Schalter, Walzen und Drehsteller, beispielsweise Potentiometer) zur physischen Funktionseinstellung ersetzen, ohne die vorteilhafte Direktheit des mechanischen Bedienelements aufzugeben. Insbesondere kann ein vom Verkehr ablenkendes Navigieren in der Menüstruktur 113 vermieden werden.

Die auswählbaren Funktionen 108 können das Einstellen verschiedener Fahrzeugkomponenten (beispielsweise das Setzen eines Sollwerts für eine Fahrzeugkomponente) umfassen. Beispielsweise können die auswählbaren Funktionen 108 das Einstellen der Leuchtweitenregulierung der Fahrzeugscheinwerfer oder das Dimmen einer Innenbeleuchtung (z. B. der Hintergrundbeleuchtung am Fahrerplatz und/oder der Instrumentenbeleuchtung am Kombinationsinstrument 100) umfassen.

Eine Bedienung bestimmter Funktionen ausschließlich in der bestehenden Menüstruktur 113 ist in vielen Jurisdiktion durch gesetzliche Vorgaben ausgeschlossen, insbesondere im Fall der Leuchtweitenregulierung, und mit der Aufmerksamkeit beim Fahren unvereinbar. Dagegen ermöglicht das Kombinationsinstrument 100 eine Direktanwahl der vorausgewählten Funktion 110. Die vorausgewählte Funktion, erfindungsgemäß die Leuchtweitenregulierung, ist somit durch die Betätigung des mechanischen Tasters 102 direkt aufrufbar.

Das Kombinationsinstrument 100 ermöglicht, Fahrzeugfunktionen 108 zusammenzufassen (d.h., zu "fusionieren"), indem über den Taster 102 als einheitliches Bedienelement der zweite Zustand bewirkt wird, in dem die Funktionen 108 in einer Auswahlebene 103 der Anzeigeeinheit 104 (vorzugsweise außerhalb der bestehenden Menüstruktur 113) auszuwählen und/oder einzustellen sind. Die Bedienung zur Auswahl und/oder Einstellungen der Funktionen 108 erfolgt vorzugsweise über bereits vorhandene, allgemeine Navigationsbedienelemente z.B. (Walzen, Tasten und/oder Wippen) am Multifunktionslenkrad (MFL) und/oder am Lenkstockschalter. Dadurch ist eine einheitliche Bedienlogik für während der Fahrt zur Verfügung stehende Einstellungen erreicht.

Da neben der vorausgewählten Funktion 110 weitere Funktionen durch den Taster 102 zugänglich sind, kann der Taster 102 als Fusionstaster (beispielhaft beschriftet mit "FT") bezeichnet werden.

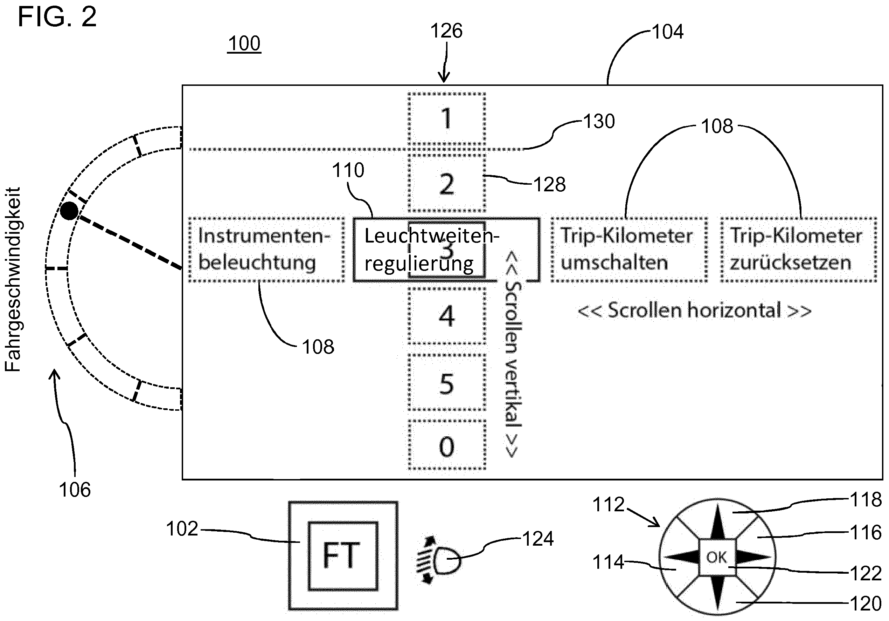

Figur 2 zeigt schematisch ein zweites Ausführungsbeispiel des Kombinationsinstruments 100. Das zweite Ausführungsbeispiel ist mit dem ersten Ausführungsbeispiel kombinierbar. Beispielsweise kann das zweite Ausführungsbeispiel als teilweise oder vollständige Weiterbildung des ersten Ausführungsbeispiels realisiert sein. Mit dem ersten Ausführungsbeispiel übereinstimmende, austauschbare oder weiterbildbare Merkmale sind mit gleichen Bezugszeichen versehen.

Die Eingabeeinheit 112 umfasst Bedienelemente 114 bis 120 zur Navigation in einer Ebene, insbesondere der Auswahlebene 103. Ferner umfasst die Eingabeeinheit 112 ein Bedienelement 122 zur Aktivierung (auch: Bestätigung) der gegenwärtig ausgewählten Funktion 110, beispielsweise zum Setzen einer ausgewählten Einstellung für die gegenwärtig ausgewählte Funktion 110.

Der mechanische Taster 102 umfasst eine Kennzeichnung der Leuchtweitenregulierung, beispielsweise ein Symbol 124 oder eine Beschriftung, welche diese vorausgewählte Funktion 110 angibt. So können gesetzliche Vorgaben zur Leuchtweitenregulierung fordern, dass das Symbol 124 der Leuchtweite am betreffenden Bedienelement (wie dem Taster 102) dargestellt ist, und/oder dass die Leuchtweitenregulierung direkt (insbesondere ohne Umwege durch eine Menüführung 113) abrufbar ist. Vorzugsweise ist durch einfache Betätigung des mechanischen Tasters 102 und Aktivierung mittels des Bedienelements 122 der Eingabeeinheit 112 die durch das Symbol 124 angegebene und vorausgewählte Funktion 110 ausführbar. Alternativ oder ergänzend kann die gegenwärtig ausgewählte (beispielsweise die vorausgewählte) Funktion 110, nachdem die Funktion 110 eine vorbestimmte Eingabezeit (von beispielsweise 10 Sekunden) ausgewählt ist, ohne weitere Betätigung der Eingabeeinheit 112 aktiviert werden.

Das Symbol 124 der Leuchtweitenregulierung kann einer gesetzlichen Vorgabe entsprechen. Alternativ oder ergänzend sind mehrere Kennzeichnungen in räumlicher Zuordnung zum Taster 102 angebracht, beispielsweise ein Symbol für jede der auswählbaren Funktionen 108. Jede Kennzeichnung kann ein Symbol und/oder eine Beschriftung umfassen.

In jedem Ausführungsbeispiel kann das Kombinationsinstrument 100 bisher voneinander unabhängige Bedienelemente auf einer Instrumententafel eines herkömmlichen Fahrzeugs über den mechanischen Taster 102 vereinigen. Hierzu umfasst das Kombinationsinstrument 100 folgende Kombination von Bedienelementen und Anzeigen. Als primäres Bedienelement zur Initiierung eines Bedienvorgangs ist der mechanische Taster 102 vorgesehen, mit welchem der zweite Zustand bewirkt wird, d.h. die Anzeigeeinheit 104 des Kombinationsinstruments 100 zeigt die Auswahlebene 103 an. Bei angezeigter Auswahlebene 103 können mit im Fahrzeug vorhandenen Bedienelementen 114 bis 122 Veränderungen der ausgewählten Funktion 110 und/oder der Einstellung für die ausgewählte Funktion 110 vorgenommen werden. Hierzu umfasst die Eingabeeinheit 112 beispielsweise entsprechende Tasten auf einem Multifunktionslenkrad, auf einem Lenkstockschalter, den beweglichen Lenkstockschalter selbst und/oder Signalschnittstellen zum Multifunktionslenkrad oder zum Lenkstockschalter.

Die Anzeigeeinheit 104 kann einen Bildschirm (z. B. ein Primärdisplay hinter dem Lenkrad und/oder ein Sekundärdisplay an der Mittelkonsole) umfassen. In der Anzeigeeinheit 104 kann mit im Fahrzeug (beispielsweise LKW oder PKW) vorhandenen Bedienelementen 114 bis 122 zur Navigation in Menüstrukturen (z.B. entsprechende Tasten auf dem Multifunktionslenkrad oder Tasten auf dem Lenkstockschalter) Einstellungen vorgenommen werden.

Im in Figur 2 gezeigten Ausführungsbeispiel sind die auswählbaren Funktionen 108 (einschließlich der aktuell ausgewählten Funktion 110) in einer ersten (beispielsweise horizontalen) Richtung angeordnet. Für jede oder einzelne Funktionen 108 sind Funktionswerte 126 auswählbar, die in einer zweiten (beispielsweise vertikalen) Richtung angeordnet sind. Diese lineare oder zirkulare Ordnung der auswählbaren Funktionswerte 126 wird auch als Listenformat bezeichnet. Alternativ oder ergänzend können Kombinationen von auswählbaren Funktionen und zugeordneten Funktionswerten als einzelne Auswahloptionen in der Auswahlebene 103 mit den Bedienelementen 114 bis 120 auswählbar sein. Bei jedem Format erfolgt die Einstellung, indem der Funktionswert 126 durch die Bedienelementen 114 bis 120 ausgewählt und durch die Bestätigung 122 gesetzt wird.

Entsprechend der Darstellung in der Anzeigeeinheit 104 sind die Funktionen 108 mittels der Tasten 114 und 116 für die linke und rechte Richtung auswählbar. Die der aktuell ausgewählten Funktion 110 zugeordneten Funktionswerte 126 sind beim Listenformat mittels der Tasten 118 und 120 für die obere und untere Richtung auswählbar. Vorzugsweise ist der ausgewählte Funktionswert unter den auswählbaren Funktionswerten 126 an der Stelle der ausgewählten Funktion 110 (beispielsweise überlagert) angezeigt.

Beim linearen Listenformat ist eine Verzögerungsbarriere (auch: Softanschlag) am Listenanfang und/oder Listenende vorgesehen. Alternativ oder ergänzen ist, insbesondere bei der zirkularen Ordnung (d.h. einem rollierenden Listenformat), die Verzögerungsbarriere 130 an oder neben einer Neutralstellung und/oder dem vorbestimmten Funktionswert 128 der Liste (beispielsweise um die Neutralstellung nach gesetzlichen Vorgaben in der Anzeigeeinheit 104 eindeutig zu kennzeichnen) vorgesehen.

Die Einstellungen im zweiten Zustand werden im Speziellen mit den Bedienelementen 114 bis 122, die im Kontext des dritten Zustands der Navigation in den Menüstrukturen 113 dienen, vorgenommen.

In einer Variante jedes Ausführungsbeispiels wird der ausgewählte Funktionswert als aktuelle Einstellung sofort vom System übernommen und/oder umgesetzt, beispielsweise indem die ausgewählte Funktion 110 vom Kombinationsinstrument 100 ausgeführt wird oder das Kombinationsinstrument 100 über ein Bussystem den aktuell ausgewählten Funktionswert an die jeweilige Fahrzeugkomponente überträgt. Beispielsweise verändert sich die Leuchtweite oder die Dimmung der Innenbeleuchtung parallel zum Einstellungsvorgang, und nicht erst nach Betätigung einer Taste zur Bestätigung 122 durch den Fahrer. Daher ist die Taste der Bestätigung 122 optional. Eine Bestätigungstaste 122 ist für Einstellungen, die bisher mit einem walzen- oder wippenartigen Bedienelement vorgenommen werden, nicht nötig.

Die grafische Anzeige der Fahrzeugfunktionen erfolgt für den Fahrer eindeutig sichtbar (beispielsweise im Sichtfeld) am primären Bildschirm des Fahrzeugs und ermöglicht einen schnellen Zugriff auf die einzelnen Fahrzeugfunktionen. Festgelegt ist auf Grundlage gesetzlicher Bestimmungen die Leuchtweitenregulierung als Startposition, d.h. als vorausgewählte Funktion 110 der Funktionsauswahl 108. Dies bedeutet, dass beim Öffnen der Auswahlebene (d.h., des zweiten Zustands) mittels des Tasters 102 immer die Leuchtweitenregulierung 110 als Startposition vorausgewählt ist.

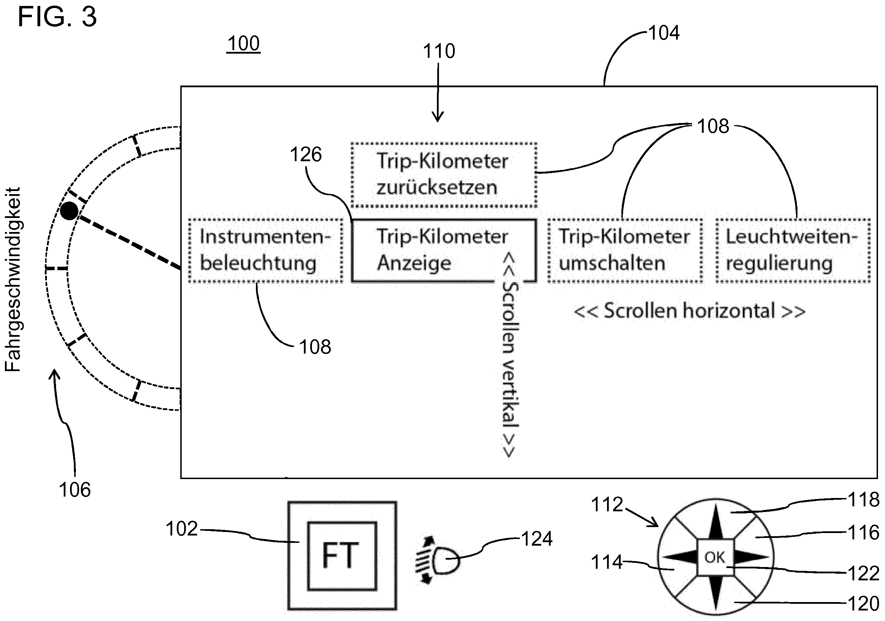

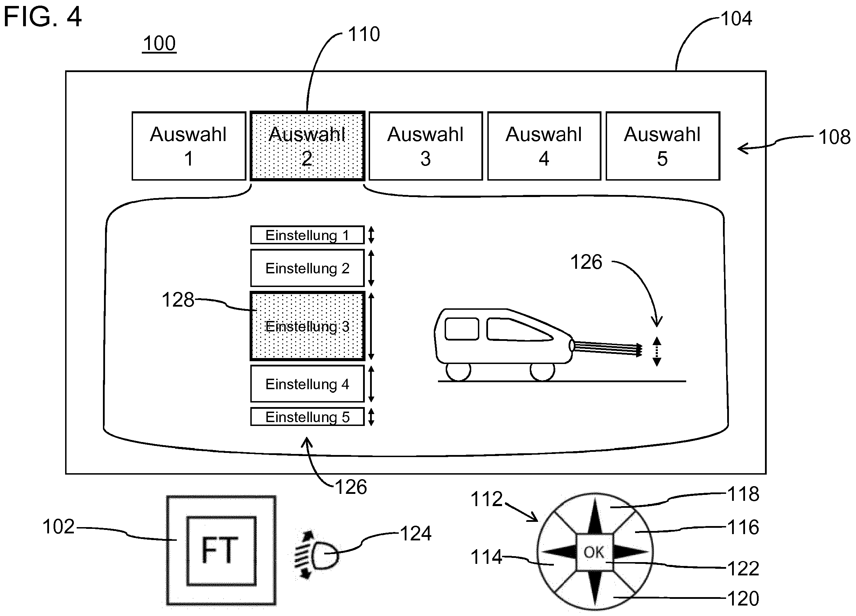

Die Auswahlebene der Anzeigeeinheit 104 im zweiten Zustand kann, beispielsweise wie im dritten Ausführungsbeispiel der Figur 3, in Kachelform oder, beispielsweise wie im vierten Ausführungsbeispiel der Figur 4, als Register ausgebildet sein. Die Auswahlebene ist an den tatsächlichen Funktionsumfang des jeweiligen Fahrzeugs und ggf. den Aufbau der hierarchischen Menüstruktur 113 angepasst für eine übersichtliche und einheitliche Bedienung.

In jedem Ausführungsbeispiel kann die Anzeigeeinheit 104, beispielsweise zusätzlich zur Umsetzung des aktuell ausgewählten Funktionswerts am Fahrzeug, eine schematische Darstellung der Wirkung des ausgewählten Funktionswerts umfassen. Figur 4 zeigt den der Leuchtweitenregulierung zugeordneten Funktionswert 126 in einer solchen schematischen Darstellung des Fahrzeugs.

In jedem Ausführungsbeispiel kann die Anzeigeeinheit 104 die Auswahlebene des zweiten Zustands der Darstellung von Angaben zum Fahrbetrieb überlagern. Beispielsweise überblendet die Auswahlebene des zweiten Zustands kurzzeitig eine Darstellung des ersten Zustands. Nach erfolgten Einstellungen, beispielsweise bewirkt vom Fahrer mit dem entsprechenden Bedienelement (erneuter Druck des Tasters 102 oder der Bestätigung 122) und/oder automatisch nach einer festgelegten Zeit, wird die Auswahlebene des zweiten Zustands ausgeblendet.

Die auswählbaren Funktionen 126, d.h. die in den Taster 102 integrierten Fahrzeugfunktionen, umfassen Funktionen, die schnell und unkompliziert, auch während der Fahrt, erreicht werden sollen und teilweise gesetzlichen Bestimmungen unterliegen (wie z.B. die Leuchtweitenregulierung). Daher ist eine Integration in eine allgemeine Menüstruktur meist nicht möglich oder unpraktisch.

Für eine exemplarischen Basisausstattung eines Nutzfahrzeugs umfassen die über den Taster 102 zugänglichen Funktionen 108 die Leuchtweitenregulierung (vorzugsweise als vorausgewählte Funktion 110, d.h. als Ausgangsposition der Auswahl in Erfüllung gesetzlicher Beschränkungen der Bedienschritte), die Instrumentenbeleuchtung oder Dimmung, das Umschalten der Darstellung im ersten Zustand zwischen Gesamtkilometer und Tageskilometer, das Zurücksetzen des Tageskilometer-Zählers und/oder die Aktivierung der Schweinwerferreinigung.

Das Kombinationsinstrument 100 kann ermöglichen, dass trotz eines vorgegebenen Satzes direktzugänglicher Fahrzeugfunktionen und gesetzlichen Beschränkungen der Betätigungsschritte nur ein Taster 102 verbaut werden muss, statt in herkömmlicher Weise jede Funktion über ein einzelnes Bedienelement aufzurufen und/oder einzustellen. Das Kombinationsinstrument 100 kann die Anzahl der physischen Bedienelemente (insbesondere der Tasten) reduzieren und dadurch Platz einsparen. Ein komplizierter Einbau verschiedenster Bedienelementarten an ungünstigen Stellen, z.B. im Kombinationsinstrument im Bereich des Displays, kann entfallen.

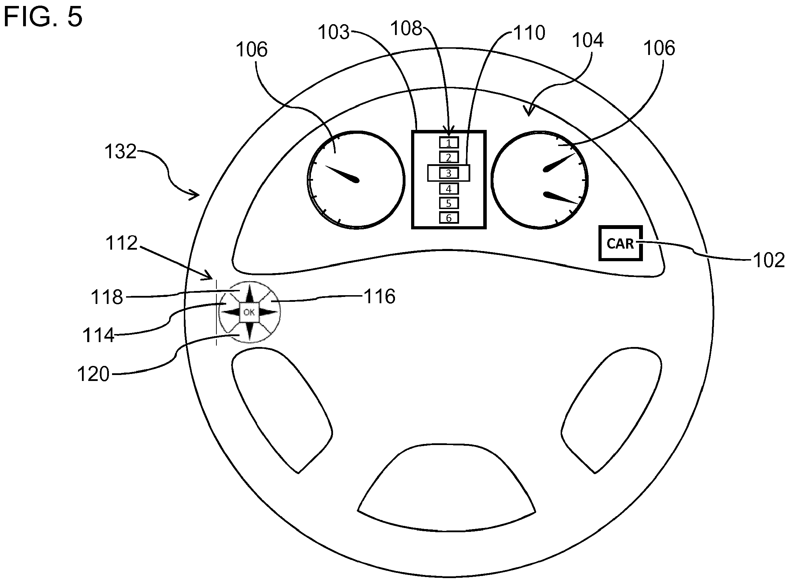

Figur 5 zeigt schematisch einen Fahrerplatz eines Fahrzeugs mit Multifunktionslenkrad 132 und einem Ausführungsbeispiel des Kombinationsinstruments. Wird der Fusionstaster 102 als primäres Bedienelement betätigt, wird in der Anzeigeeinheit 104 des Kombinationsinstruments die Auswahlebene 103 angezeigt, d.h. der zweite Zustand aktiviert (beispielsweise ausgehend vom ersten oder dritten Zustand) bzw. deaktiviert (beispielsweise durch eine zweite Betätigung des Tasters 102 im zweiten Zustand).

Figur 5 zeigt die Ausgangsposition beim Öffnen des zweiten Zustands, d.h., den Ausgangszustand nach Betätigung des Tasters 102, wobei die Neutralstellung der Leuchtweitenregulierung 110 vorausgewählt ist.

Die im Ausführungsbeispiel der Figur 5 mit "CAR" beispielhaft beschriftete Taste 102 befindet sich im primären Sichtfeld des Fahrers. Unterhalb der Taste 102 können, zusätzlich zum gesetzlich vorgeschriebenen Symbol der Leuchtweitenregulierung, noch weitere Symbole als Hinweis auf die anderen Einstellungsmöglichkeiten, die innerhalb dieser fusionierten Bedientechnik über den Taster 102 erreichbar sind, dargestellt sein.

Der Fahrer kann, nach Drücken des Fusionstasters 102, mit Pfeiltasten 114 bis 120 des Multifunktionslenkrads als Beispiel der Eingabeeinheit 112 die gewünschten Einstellungen im in der Auswahlebene 103 vornehmen, das über die Anzeigeeinheit 104 im Kombinationsinstrument dargestellt ist. Während die in Figur 5 gezeigten schematischen Bedienelement 114 bis 120 der Eingabeeinheit 112 Tasten umfassen, können in jedem Ausführungsbeispiel die Bedienelement der Eingabeeinheit 112 auch eine Walze und/oder eine Wippe umfassen.

Ausgeblendet wird die Auswahlebene 103 automatisch 10 Sekunden nachdem der Fahrer den Einstellungsvorgang abgeschlossen hat. Alternativ kann der Fahrer die Anzeige durch ein erneutes Drücken des Fusionstasters 102 oder durch eine ESC-Taste an der Eingabeeinheit 112 ausblenden.

Wie dem Fachmann anhand vorstehender exemplarischer Ausführungsbeispiele und Varianten ersichtlich, können durch die Technik verschiedene, bisher einzeln angeordnete Funktionen zusammengefasst und zu einem physischen Bedienelement vereint sein. Das Kombinationsinstrument kann eine vereinigte Bedienung am Fahrerplatz bisher voneinander unabhängiger Bedienelemente, beispielsweise auf der Instrumententafel von Nutzfahrzeugen, ermöglichen.

Das Kombinationsinstrument kann in einer digitalen Anzeige im primären Sichtfeld des Fahrers eine direkte Rückmeldung der Einstellungen an den Fahrer, zusätzlich zu den Auswirkungen im System, implementieren.

Die Bedienlogik ist für die fusionierten Funktionen durchgängig. Einstellungen können anhand einfach-vorhandener Bedienelemente der Eingabeeinheit unkompliziert erfolgen. Durch den einen Taster besteht wesentlich weniger Platzbedarf, da zur Bedienung auf bereits bestehende Bedienelemente zurückgegriffen werden kann.

Dem Fahrer stehen die fusionierten Funktionen direkt zur Verfügung mit weniger Ablenkung bei der Bedienung, insbesondere während der Fahrt, da sich der Taster im Sichtfeld befindet und Einstellungen mit den bestehenden und routiniert auffindbaren Bedienelementen unkompliziert durchführen lassen.

Die Einstellungen müssen nicht innerhalb einer hierarchischen Menüstruktur gesucht werden, sondern können direkt abgerufen werden. Dadurch besteht weniger Ablenkungsgefahr und die Umsetzung, speziell der Leuchtweitenregulierung, kann gesetzlichen Vorgaben genügen.

Form und Umfang der Auswahlebene kann an verschiedene Fahrzeugvarianten und Ausstattungsoptionen angepasst werden.

Obwohl die Erfindung in Bezug auf exemplarische Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder bestimmte Fahrzeugfunktionen an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Kombinationsinstrument
- 102: Taster
- 103: Auswahlebene
- 104: Anzeigeeinheit
- 106: Angaben zum Fahrbetrieb
- 108: Auswählbare Funktionen
- 110: Ausgewählte Funktion
- 111: Menütaster
- 112: Eingabeeinheit
- 113: Menüstruktur
- 114: Linke Richtung
- 116: Rechte Richtung
- 118: Obere Richtung
- 120: Untere Richtung
- 122: Bestätigung
- 124: Symbol der Leuchtweitenregulierung
- 126: Einstellbarer Funktionswert
- 128: Vorbestimmter Funktionswert, insbesondere Neutralstellung
- 130: Verzögerungsbarriere
- 132: Multifunktionslenkrad

## Patentansprüche

1. Kombinationsinstrument (100) für ein Fahrzeug, umfassend:
einen mechanischen Taster (102);
eine Anzeigeeinheit (104), die dazu ausgebildet ist, in einem ersten Zustand Angaben (106) zum Fahrbetrieb anzuzeigen und in Reaktion auf eine Betätigung des mechanischen Tasters (102) in einen zweiten Zustand zu wechseln, in dem auswählbare Funktionen (108) des Kombinationsinstruments angezeigt sind, wobei die auswählbaren Funktionen (108) eine Leuchtweitenregelung umfassen; und
eine Eingabeeinheit (112) zur Auswahl einer der im zweiten Zustand angezeigten Funktionen (108),
**dadurch gekennzeichnet, dass**
im ersten Zustand des Kombinationsinstruments (100) ausschließlich die Angaben (106) zum Fahrbetrieb angezeigt sind; und
der mechanische Taster (102) ein Symbol (124) der Leuchtweitenregelung aufweist und die Anzeigeeinheit (104) ferner dazu ausgebildet ist, in Reaktion auf die Betätigung des Tasters (102) die Funktion der Leuchtweitenregelung vorauszuwählen.

2. Kombinationsinstrument nach Anspruch 1, wobei im zweiten Zustand die auswählbaren Funktionen (108) zusätzlich zu den Angaben (106) zum Fahrbetrieb angezeigt werden oder diese überlagern.

3. Kombinationsinstrument nach Anspruch 1 oder 2, wobei der mechanische Taster (102) in räumlicher Zuordnung zur Anzeigeeinheit (104) angeordnet ist.

4. Kombinationsinstrument nach einem der Ansprüche 1 bis 3, wobei die Eingabeeinheit (112) Multifunktionstasten (114-122) eines Lenkrads (132) des Fahrzeugs umfasst.

5. Kombinationsinstrument nach Anspruch 4, wobei der mechanische Taster (102) und/oder die Anzeigeeinheit (104) an einem Fahrerplatz hinter dem Lenkrad (132) des Fahrzeugs angeordnet ist.

6. Kombinationsinstrument nach einem der Ansprüche 1 bis 5, wobei die Eingabeeinheit (112) zur Eingabe erster Richtungen (114, 116) ausgebildet ist, und die Anzeigeeinheit (104) ferner dazu ausgebildet ist, in Reaktion auf die Eingabe einer der ersten Richtungen (114, 116) die ausgewählte Funktion (110) zu verändern.

7. Kombinationsinstrument nach einem der Ansprüche 1 bis 6, wobei die Anzeigeeinheit (104) ferner dazu ausgebildet ist, einen der ausgewählten Funktion (110) zugeordneten Funktionswert (126) anzuzeigen.

8. Kombinationsinstrument nach Anspruch 7, wobei die Eingabeeinheit (112) zur Eingabe einer Bestätigung (122) und zweiter Richtungen (118, 120) ausgebildet ist, und das Kombinationsinstrument (100) dazu ausgebildet ist, entsprechend der Eingabe einer der zweiten Richtungen (118, 120) den angezeigten Funktionswert (126) zu verändern und/oder in Reaktion auf die Eingabe der Bestätigung (120) den angezeigten Funktionswert (126) der ausgewählten Funktion (110) zuzuweisen.

9. Kombinationsinstrument nach Anspruch 8, ferner dazu ausgebildet, die Veränderung des Funktionswerts (126) in Reaktion auf die Eingabe einer der zweiten Richtungen (118, 120) zu verzögern, wenn der angezeigte Funktionswert (126) einem vorbestimmten Funktionswert (128) entspricht.

10. Kombinationsinstrument nach Anspruch 9, wobei bei der Leuchtweitenregulierung als der ausgewählten Funktion (110) der vorbestimmte Funktionswert (128) einer Neutralstellung der Leuchtweitenregulierung entspricht.

11. Kombinationsinstrument nach einem der Ansprüche 1 bis 10, wobei die Anzeigeeinheit (104) ferner dazu ausgebildet ist, nach einer vorbestimmten Zeitdauer ohne Eingabe (114-122) an der Eingabeeinheit (112) vom zweiten Zustand in den ersten Zustand zu wechseln.

12. Kombinationsinstrument nach einem der Ansprüche 1 bis 11, wobei die Anzeigeeinheit (104) ferner dazu ausgebildet ist, in Reaktion auf eine Betätigung des mechanischen Tasters (102) im zweiten Zustand in den ersten Zustand zu wechseln.

13. Fahrzeug (100), insbesondere ein Nutzfahrzeug, umfassend ein Kombinationsinstrument (100) gemäß einem der Ansprüche 1 bis 12.

## Claims

1. A combination instrument (100) for a vehicle comprising:
a mechanical push-button (102);
a display unit (104) configured to display, in a first state, driving operation indicia (106) and, in response to actuation of the mechanical button (102), to change to a second state in which selectable functions (108) of the instrument cluster are displayed, the selectable functions (108) including headlamp leveling; and
an input unit (112) for selecting one of the functions (108) displayed in the second state,
**characterised in that**
in the first state of the combined instrument (100), only the driving mode information (106) is displayed; and
the mechanical button (102) comprises a headlamp leveling control symbol (124) and the display unit (104) is further adapted to preselect the headlamp leveling control function in response to actuation of the button (102).

2. The combination instrument according to claim 1, wherein in the second state the selectable functions (108) are displayed in addition to or superimposed on the driving mode information (106).

3. The combination instrument according to claim 1 or 2, wherein the mechanical button (102) is arranged in spatial association with the display unit (104).

4. The combination instrument according to any one of claims 1 to 3, wherein the input unit (112) comprises multifunction buttons (114-122) of a steering wheel (132) of the vehicle.

5. The combination instrument according to claim 4, wherein the mechanical button (102) and/or the display unit (104) is arranged at a driver's position behind the steering wheel (132) of the vehicle.

6. The combination instrument according to any one of claims 1 to 5, wherein the input unit (112) is adapted to input first directions (114, 116), and the display unit (104) is further adapted to change the selected function (110) in response to the input of one of the first directions (114, 116).

7. The combination instrument according to any one of claims 1 to 6, wherein the display unit (104) is further adapted to display a function value (126) associated with the selected function (110).

8. The combination instrument according to claim 7, wherein the input unit (112) is configured to input a confirmation (122) and second directions (118, 120), and the combination instrument (100) is configured to change the displayed function value (126) according to the input of one of the second directions (118, 120) and/or to assign the displayed function value (126) to the selected function (110) in response to the input of the confirmation (120).

9. The combination instrument according to claim 8, further configured to delay the change of the function value (126) in response to the input of one of the second directions (118, 120) if the displayed function value (126) corresponds to a predetermined function value (128).

10. The combination instrument according to claim 9, wherein, with headlamp leveling as the selected function (110), the predetermined function value (128) corresponds to a neutral position of the headlamp leveling.

11. The combination instrument according to any one of claims 1 to 10, wherein the display unit (104) is further configured to change from the second state to the first state after a predetermined period of time without input (114-122) at the input unit (112).

12. The combination instrument according to any one of claims 1 to 11, wherein the display unit (104) is further configured to change to the first state in response to an actuation of the mechanical button (102) in the second state.

13. Vehicle (100), preferably a commercial vehicle, comprising a combination instrument (100) according to any one of claims 1 to 12.

## Revendications

1. Instrument combiné (100) pour un véhicule, comprenant :
un bouton mécanique (102) ;
une unité d'affichage (104) qui est configurée pour, dans un premier état, afficher des indications (106) à propos du mode de conduite et, en réaction à un actionnement du bouton mécanique (102), changer dans un deuxième état dans lequel sont affichées des fonctions (108) sélectionnables de l'instrument combiné, les fonctions (108) sélectionnables comprenant une régulation de la portée d'éclairage ; et
une unité de saisie (112) destinée à sélectionner l'une des fonctions (108) affichées dans le deuxième état,
**caractérisé en ce que**
dans le premier état de l'instrument combiné (100), seules sont affichées les indications (106) à propos du mode de conduite ; et
le bouton mécanique (102) possède un symbole (124) de la régulation de la portée d'éclairage et l'unité d'affichage (104) est en outre configurée pour, en réaction à l'actionnement du bouton (102), présélectionner la fonction de régulation de la portée d'éclairage.

2. Instrument combiné selon la revendication 1, les fonctions (108) sélectionnables étant, dans le deuxième état, affichées en plus des indications (106) à propos du mode de conduite ou étant superposées à celles-ci.

3. Instrument combiné selon la revendication 1 ou 2, le bouton mécanique (102) étant disposé en association spatiale avec l'unité d'affichage (104).

4. Instrument combiné selon l'une des revendications 1 à 3, l'unité de saisie (112) comportant des touches multifonctions (114-122) d'un volant de direction (132) du véhicule.

5. Instrument combiné selon la revendication 4, le bouton mécanique (102) et/ou l'unité d'affichage (104) étant disposé au niveau d'un poste de conducteur derrière le volant de direction (132) du véhicule.

6. Instrument combiné selon l'une des revendications 1 à 5, l'unité de saisie (112) étant configurée pour la saisie de premières directions (114, 116) et l'unité d'affichage (104) étant en outre configurée pour modifier la fonction sélectionnée (110) en réaction à la saisie de l'une des premières directions (114, 116).

7. Instrument combiné selon l'une des revendications 1 à 6, l'unité d'affichage (104) étant en outre configurée pour afficher une valeur de fonction (126) associée à la fonction sélectionnée (110).

8. Instrument combiné selon la revendication 7, l'unité de saisie (112) étant configurée pour saisir une confirmation (122) et des deuxièmes directions (118, 120), et l'instrument combiné (100) étant configuré pour modifier la valeur de fonction (126) affichée en fonction de la saisie de l'une des deuxièmes directions (118, 120) et/ou affecter la valeur de fonction (126) affichée à la fonction sélectionnée (110) en réaction à la saisie de la confirmation (120).

9. Instrument combiné selon la revendication 8, en outre configuré pour retarder la modification de la valeur de fonction (126) en réaction à la saisie de l'une des deuxièmes directions (118, 120) lorsque la valeur de fonction (126) affichée correspond à une valeur de fonction prédéterminée (128).

10. Instrument combiné selon la revendication 9, lors de la régulation de la portée d'éclairage en tant que fonction sélectionnée (110), la valeur de fonction prédéterminée (128) correspondant à une position neutre de la régulation de la portée d'éclairage.

11. Instrument combiné selon l'une des revendications 1 à 10, l'unité d'affichage (104) étant en outre configurée pour passer du deuxième état au premier état après une durée prédéterminée sans saisie (114-122) au niveau de l'unité de saisie (112).

12. Instrument combiné selon l'une des revendications 1 à 11, l'unité d'affichage (104) étant en outre configurée pour passer dans le premier état en réaction à un actionnement du bouton mécanique (102) dans le deuxième état.

13. Véhicule (100), notamment un véhicule utilitaire, comprenant un instrument combiné (100) selon l'une des revendications 1 à 12.
